# EUROPEAN PATENT APPLICATION

(11) **EP 1 870 809 A2**
(43) Date of publication of application: **26.12.2007**
(21) Application number: 06077087.2
(22) Date of filing: 23.11.2006
(51) Int. Cl.: G06F 11/36

(54) **Software test method and software test apparatus**

(30) Priority: 28.12.2005 KR 20050131936
(71) Applicant: Samsung Electronics Co., Ltd., Suwon-si, Gyeonggi-Do (KR)
(72) Inventor: Hwang, Soon-hoon, Giheung-gu Yongin-si Gyeonggi-do (KR)
(74) Representative: Hylarides, Paul Jacques

(57) **Abstract**

A software test method and an apparatus thereof. The software test method includes operating a test mode to start a software test, inputting a test target function, reading token information of the test target function, displaying an information selecting screen to ask for information on the token information, generating test information on the basis of information on the token information input through the information selecting screen and the test target function, and outputting the test information to test the test target function.

## Description

This application claims priority from Korean Patent Application No. P2005-0131936, filed on December 28, 2005, in the Korean Intellectual Property Office, the disclosure of which is incorporated herein in its entirety by reference.

### BACKGROUND OF THE INVENTION

### Field of the Invention

The present general inventive concept relates to a software test method and an apparatus thereof, and more particularly, to a software test method to ask a user for information on a test target function, and an apparatus thereof.

### Description of the Related Art

As software has become gradually complicated and ceaselessly changed, the demand for a verification of software has also become intricate and difficult.

Generally, a software test is largely divided into a unit test by a software unit, an integration test by integration of plural software units, and a system test by a whole system. The software test takes a simulation form substituting various variables in a test program to test a software function.

For example, the unit test determines a minimum module of a test target, separates the determined minimum module from the remaining codes, and tests whether the separated minimum module operates exactly as expected.

The integration test is a test method logically extended from the unit test. The simplest type of the integration test is realized by integrating two units that have undergone unit tests, in one component, and testing an interface between the two units. That is, the integration test is the test method to detect a problem that may occur when two units are coupled.

The system test is a whole system test method executed after individual software program tests are completed. For example, the system test may even include a user-direct-use system part test as well as a program test.

The software test may be operated in a full-manual way, in which a user forms a test case through selecting a type of test software and by defining an additional variable, a sub function, and the like for a test.

However, the full-manual way has inconvenience of consuming a lot of time and efforts for forming a test case one-by-one and the like.

On the other hand, the software test may also be operated in a full-automatic way, in which the test software searches a variable and other necessary values for a test, and tests a target function automatically.

However, in the full-automatic way, it is not easy to execute the test software. When there is an error in executing the test software in the full-automatic way, a wrong test or no test may be performed. Also, when using a test software for a unit test, the full-automatic way has inconvenience of reconstructing the test software to meet an integration environment for the integration test.

Also, the software test may be operated in a semi-automatic way, in which a function for the unit test, and a function and a variable for the integration test are user-defined at a headfile, and an output function searching and defining a variable and the functions based on the headfile is generated to make a data case automatically and to execute a test.

The semi-automatic way, however, has inconvenience that a user must search a variable and a function at a software unit to define them at a headfile.

### SUMMARY OF THE INVENTION

The present general inventive concept provides a software test method and an apparatus thereof by which a user changes a test software to be suitable for testing on the basis of input information by asking a user for information on a test target function.

Additional aspects and/or advantages and utilities of the present general inventive concept will be set forth in part in the description which follows and, in part, will be obvious from the description, or may be learned by practice of the present general inventive concept.

The foregoing and/or other aspects and utilities of the present general inventive concept are achieved by providing a software test method comprising operating a test mode to start a software test inputting a test target function reading token information of the test target function displaying an information selecting screen to ask for information on the token information generating test information according to the information on the token information input through the information selecting screen and the test target function, and outputting the test information to test the test target function.

The software test method may further comprise displaying a type selection screen to select a test type if the test target function is input, wherein the generating of the test information further comprises generating the test information on the basis of the test type.

The displaying of the information selecting screen may comprise displaying a screen to ask for information on at least one of variable information, define information, sub function information, and standard function information.

The variable information may comprise at least one of a variable data type, information on whether a variable pointer is set up, and test case information.

The test case information may comprise a test case type and data.

The test case type may comprise at least one of a fix case, a default case and a user case.

The test information may comprise at least one of a test case as a reference corresponding to a test item and a test driver.

The test type may comprise one of a unit test and an integration test.

The generating of the test information may comprise displaying at least one of the variable information of the test target function, define information, sub function information, standard function information, and a type of the test case on the basis of information through at least one among the information selecting screen and the type selecting screen.

The foregoing and/or other aspects and utilities of the present general inventive concept are also achieved by providing a software test apparatus comprising a displaying part to display an image, an interface screen generating part to generate a screen to be displayed on the displaying part, a storing part to store a test target function having token information, a user selecting part to select a test mode to start a software test, and a controller to control the interface screen generating part to generate an information selecting screen to ask for information on the token information when the test mode is selected, and to generate test information on the basis of information input through the information selecting screen.

The controller may control the interface screen generating part to generate a type selecting screen to select a test type when the test target function is input, and to generate the test information on a basis of the test type input through the type selecting screen.

The information selecting screen may comprise a screen to ask for information on at least one of variable information, define information, sub function information and standard function information.

The variable information comprises at least one of a variable data type, information on whether a variable pointer is set up, and test case information.

The test case information may comprise a test type having at least one of a fixed case, a default case, and a user case.

The controller may generate the test information having at least one of a test case as a reference for the target function test item and a test driver.

The test type may comprise one of a unit test and an integration test.

The controller may comprise a display controller to control the interface screen generating part and a test information generating part to generate the test information.

The foregoing and/or other aspects and utilities of the present general inventive concept are also achieved by providing a computer readable recording medium to execute a computer readable code to perform a software test method, the method comprising operating a test mode to start a software test, inputting a test target function, reading token information of the test target function, displaying an information selecting screen to ask for information on the token information, generating test information according to the information on the token information input through the information selecting screen and the test target function, and outputting the test information to test the test target function.

The foregoing and/or other aspects and utilities of the present general inventive concept are also achieved by providing a software test method, comprising generating an interface screen to receive a test target function, determining token information according to the test target function input, generating test information according to the token information selected, and testing a software according to the test information generated.

The software tested may be a forming unit of software tested independently by a user.

The method may further comprise inputting a software language type before determining the token information, wherein the determining of the token information may be performed according to the test target function input and the software language type input.

The method may further comprise inputting a type of software test before determining the token information, wherein the determining of the token information may be performed according to the test target function input and the type of software test input.

### BRIEF DESCRIPTION OF THE DRAWINGS

The above and/or other aspects and advantages of the present invention will become apparent and more readily appreciated from the following description of the embodiments, taken in conjunction with the accompanying drawings of which:
FIG. 1 is a control block diagram illustrating a software test apparatus according to an embodiment of the present general inventive concept.
FIG. 2 is a control flowchart illustrating a software test method according to an embodiment of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to like elements throughout. The embodiments are described below in order to explain the present general inventive concept by referring to the figures.

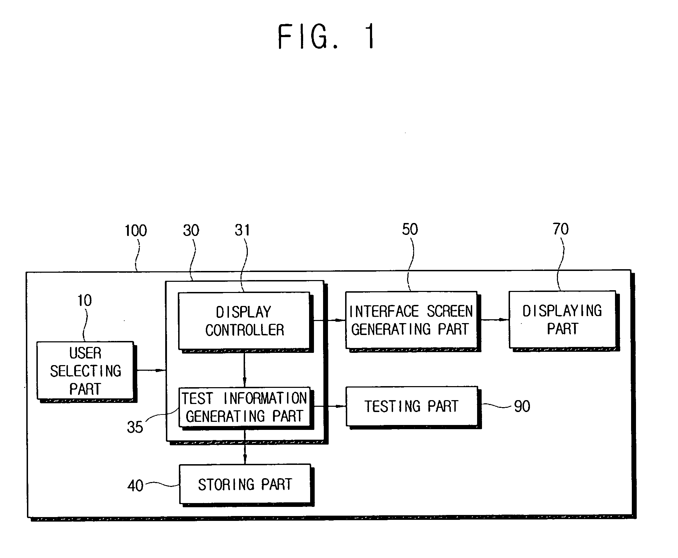

As illustrated in FIG. 1, a software test apparatus 100 according to the present general inventive concept may comprise a displaying part 70, an interface screen generating part 50, a storing part 40, a user selecting part 10, and a controller 30 to control them. The software test apparatus 100 may further comprise a testing part 90 also controlled by the controller 30.

The displaying part 70, according to the present embodiment, receives an output signal of an interface screen from the interface screen generating part 50 and displays an image. The displaying part 70 may comprise a display module (not illustrated) on which an image is formed, and a module driving part (not illustrated) to process an image signal and to display an image on the display module.

The display module can comprise various types of display modules, such as a CRT (cathode ray tube), a DLP (digital light processing), a PDP (plasma display panel), and the like. For example, when the display module is the DLP, the module driving part may also comprise an optical engine. When the display module is an LCD, the module driving part may also comprise a printed circuit board to convert an input signal into a data signal and a gate signal. In the same way, each displaying part 70 may have a construction corresponding with the module driving part according to the various types of the display modules.

According to a control of the controller 30 (to be described below), the interface screen generating part 50 generates a screen and displays it on the displaying part 70. The interface screen generating part 50 outputs an interface screen in a signal processing part (not illustrated), and mixes the interface screen input from the signal processing part with a separate image signal. The signal processing part may output the interface screen on the displaying part 70 by displaying it at a predetermined position of the displaying part 70.

The user selecting part 10 may be realized as various types of user selecting parts, such as a plurality of input keys, a button, a mouse, a keyboard, a touch pad, and the like, so that a user can input or select a predetermined function. Also, if an interface screen having a predetermined menu is generated in the displaying part 70, a user can select, manipulate, etc. the predetermined menu of the interface screen by using the user selecting part 10. The user can also select a test mode to start a software test by using the user selecting part 10 according to the present general inventive concept. For example, the user selecting part 10 may comprise an additional key to select the test mode, or may select the test mode through the interface screen and the like.

The storing part 40 stores a test target function having token information. For example, the storing part 40 may be formed of any construction to store data, such as a harddisk, a RAM, a ROM, and the like. Here, the token information represents a basic linguistic element that cannot be divided grammatically any more. For example, the token information may comprise a key word, an operator, a punctuation mark, or the like.

The controller 30 according to the present embodiment controls each part of the software test apparatus 100 so that functions of each part can be executed.

In detail, the controller 30 may comprise a display controller 31 and a test information generating part 35. For example, the display controller 31 may control each part of the software testing apparatus 100, such as the interface screen generating part 50, the displaying part 70, and the like, so that a predetermined image can be displayed on the displaying part 70. The test information generating part 35 generates test information before a target function test.

If a test mode to start a software test is selected through the user selecting part 10, the display controller 31 may control the interface screen generating part 50 to generate the interface screen to input the test target function. Alternatively, after the test mode is selected, the test target function may be defined by selecting a file having the test target function, and the like.

Then, the display controller 31 may control the interface screen generating part 50 to generate an information selecting screen to ask for information on token information of the test target function. The display controller 31 outputs the input token information on the test information generating part 35 through an information selecting screen. Accordingly, the display controller 31 can control the test information generating part 35 to generate the test information.

Here, the information on the token information, for example, may comprise information on at least one of variable information, define information, sub function information, and standard function information. Thus, the information selecting screen may comprise a screen to ask for detailed information on the above-described token information.

At this time, the variable information may comprise at least one item of information among a variable data type, information on whether a variable pointer is set up, and test case information. For example, the test case information may serve as a reference for an item to be tested. Also, the test case information may comprise a test type having at least one of a fixed case, a default case, and a user case.

For example, when the fixed case or the user selecting case is selected, the display controller 31 may allow the user to input data of the test case. The controller 30 may allow the input of one datum when the fixed case is selected and the input of plural data when the user case is selected.

Also, the display controller 31 may control the interface screen generating part 50 to generate a type selecting screen to select a test type when the test mode is selected.

If the display controller 31 outputs the input test type on the test information generating part 35, the test information generating part 35 may generate test information on the basis of the selected test type. For example, the test type may comprise a unit test and an integration test.

A unit according to the present general inventive concept can be designated as a minimum element or module of a software, where one function may be operated by one unit or a plurality of units. That is, while a conventional test of a normal software operation is only possible after the completion of the whole software, the unit, according to the present general inventive concept, is a forming unit of the software that can be tested independently by a user. Also, the unit may comprise at least one sub-unit. The unit according to the present general inventive concept may not be limited to a specific size or a specific function.

That is, the unit test determines a minimum module of a test target, separates the determined minimum module from the remaining codes, and tests whether the separated minimum module operates as expected.

An integration test is a test method logically extended from units that have undergone unit tests. The simplest type of the integration test can be realized by integrating two units, in one component, and testing an interface between the two units. That is, the integration is the test method to detect a problem that may occur when two units are coupled.

That is, the test information generating part 35, according to the present general inventive concept, may generate test information according to information supplied through at least one of the information selecting screen and the type selecting screen, which are described above. For example, the test information may comprise at least one of a test case as a reference corresponding to a test item, and a test driver to test a test target function.

The test driver can be defined as a substantial program constructed by combining a unit, a sub function, a standard function, a define, a variable, and the like together in order to test a test target function. That is, the test information generating part 35 generates a test case to determine a test item. Also, the test information generating part 35 may generate a test driver to test a test target function on the basis of the test case.

The controller 30 may output the generated test driver and the generated test case on a testing part 90. Then, the testing part 90 may execute the test driver to test the test target function according to each test case. The testing part 90 may operate a test for the test target function and store a test result corresponding to each of the test cases.

A software to execute each function in the test information generating part 35 and the testing part 90 may be constructed. For example, the test generation part 35 and the testing part 90 may be embodied in software, in hardware, or in a combination thereof. For example, the test generation part 35 and the testing part 90 may be embodied as computer readable codes on a computer readable recording medium.

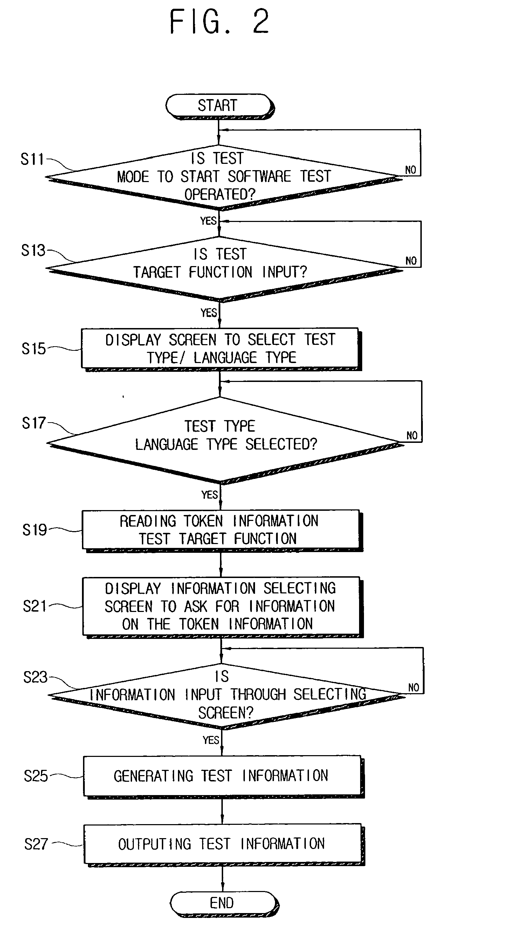

According to the present general inventive concept, the software testing 100 may start a software test according to the following method sequence illustrated in FIG. 2.

Referring to FIGS. 1 and 2, in the software test method according to the present general inventive concept, first, it is determined whether a test mode to start the software test may be elected or operated (operation S11), and then, if the test mode to start the software test is elected, it is determined whether a test target function may be input (operation S13). If the test target function is input, token information is read (operation S19). The controller 30 displays an information selecting screen to ask for information on the token information on the displaying part 70 (operation S21). If the information on the token information is input through the information selecting screen (operation S23), the controller 30 generates test information on the basis of input information and the test target function (operation S25).

At this time, if the test target function is input in operation S13, the controller 30 may also display a type selecting screen to ask for a test type on the displaying part 70 (operation S15). If the test type is selected through the type selecting screen (operation S17), the controller 30 may generate test information on the basis of the information selected through the information selecting screen and the test type selected through the type selecting screen (operation S25). The controller 30 may output the selected test information on the testing part 90 to test the test target function (operation S27).

Hereinbelow, a software test method according to an embodiment of the present general inventive concept will be described in reference to FIGS. 1 and 2.

According to the embodiment of the present general inventive concept, a user may operate a test software to start a software test. If an operation of the test software is started, a controller 30 according to the present general inventive concept may recognize that a test mode to start the software test is under operation (operation S11).

Accordingly, the controller 30 may control an interface screen generating part 50 so that a screen to input a test target function can be generated. If the screen to input the test target function generated in the interface screen generating part 50 is displayed on the displaying part 70, a user may input the test target function (operation S13).

The controller 30 may also control the interface screen generating part 50 to generate a screen to input a language type of a code or a type selecting screen to input a test type, and to display it on the displaying part 70 (operation S15). For example, the language type of the code may comprise various program languages such as a C language, a C++ language, a basic language, and the like.

A user may select the language type of the code or the test type through the type selecting screen displayed on the displaying part 70 (operation S17).

The controller 30 may read the token information of the input test target function (operation S19). The controller 30 may control the interface screen generating part 50 to generate the information selecting screen to ask information on the token information. Thus, if the information selecting screen is displayed on the displaying part 70 (operation S21), the user may select information through the information selecting screen by using a user selecting part 10 (operation S23).

For example, the information selecting screen may comprise a screen to ask for information on at least one item among variable information corresponding to each of the token information read by the controller 30, define information, sub function information, and standard function information.

That is, if the token information read by the controller 30 comprises a variable, the information selecting screen may comprise at least one item among variable data types such as a character, an int, a double and the like, whether a variable pointer to inform a variable position is set up in the storing part 40, and test case information.

Here, the test case information may comprise a test case type. At this time, as described above, the test case type may comprise a fixed case, a default selecting case, and a user case.

Also, if the token information read by the controller 30 comprises a function, the information selecting screen may comprise a screen to select whether the function is a sub function or a standard function.

The controller 30 may generate the test information on the basis of the information input through the information selecting part and the type selecting screen (operation S25). The controller 30 may display at least one among variable information of the test target function, define information, a sub function information, a standard function information, and a type of the test case on the basis of the information input through the information selecting part and the type selecting screen. Accordingly, a user can judge whether or not the test information is generated correctly to be suitable for his / her purpose by checking whether the displayed number is correct.

For example, the test information may comprise at least one of the test case as the reference for the test item and the test driver.

By outputting the generated test information on the testing part 90 (operation S27), the controller 30 may carry out the software test.

For the above-described exemplary embodiment of the present general inventive concept, in the software test method, the type selecting screen or the information selecting screen may be displayed by dialog form. That is, a screen questioning "What is a test type?" may be displayed on the displaying part 70. According to the test type input by a user, the suitable information screen for the type of unit test or integration test may be displayed. That is, various screens of various dialog forms, such as "Do you use a pointer?", "What is a type of a test case?", and the like, may be displayed. Thus, the user may start the software test by replying to the questions displayed on the screen as if he/she is in conversation, thereby testing a software more efficiently.

For the above-described exemplary embodiment of the present general inventive concept, the controller 30 or the test information generating part 35 of the controller 30 may be provided with additional software. Also, the additional software may be provided to comprise the testing part 90. At this time, the software test apparatus 100 according to the present general inventive concept may comprise various electromagnetic devices having the above-described software. For example, the software test apparatus 100 and the software test method illustrated in FIGS. 1 and 2 may be embodied in software, in hardware, or in a combination thereof, and as computer readable codes on a computer readable recording medium. The computer readable recording medium may include any data storage device suitable to store data that can be thereafter read by a computer system. Examples of the computer readable recording medium include, but are not limited to, a read-only memory (ROM), a random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion.

As described above, in accordance with the software test method according to an embodiment of the present general inventive concept, a user may change a simple option or may input information on a dialog form before testing a software that is a test target function. The test method according to the present general inventive concept may conduct the test in dialog form. Accordingly, the user can check the test process directly without difficulty. Thus, a software test method and a software test apparatus thereof according to the present general inventive concept may demand less effort of a user with few errors.

As described above, the present general inventive concept provides a software test method by which a user changes a software to be suitable to test on the basis of an input information by asking a user for information on a test target function, and an apparatus thereof.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

## Claims

1. A software test method, comprising:
operating a test mode to start a software test;
inputting a test target function;
reading token information of the test target function;
displaying an information selecting screen to ask for information on the token information;
generating test information according to the information on the token information input through the information selecting screen and the test target function; and
outputting the test information to test the test target function.

2. The software test method according to claim 1, further comprising:
displaying a type selection screen to select a test type if the test target function is input,
wherein the generating of the test information further comprises generating the test information on the basis of the test type.

3. The software test method according to claim 2, wherein the displaying of the information selecting screen comprises displaying a screen to ask for information on at least one of variable information, define information, sub function information, and standard function information.

4. The software test method according to claim 3, wherein the variable information comprises at least one of a variable data type, information on whether a variable pointer is set up, and test case information.

5. The software test method according to claim 4, wherein the test case information comprises a test case type and data.

6. The software test method according to claim 5, wherein the test case type comprises at least one of a fix case, a default case, and a user case.

7. The software test method according to claim 6, wherein the test information comprises at least one of a test case as a reference corresponding to a test item and a test driver.

8. The software test method according to claim 2, wherein the test type comprises one of a unit test and an integration test.

9. The software test method according to claim 3, wherein, the generating of the test information comprises displaying at least one of the variable information of the test target function, define information, sub function information, standard function information, and a type of the test case on the basis of information through at least one among the information selecting screen and the type selecting screen.

10. A software test apparatus comprising:
a displaying part to display an image;
an interface screen generating part to generate a screen to be displayed on the displaying part;
a storing part to store a test target function having token information;
a user selecting part to select a test mode to start a software test; and
a controller to control the interface screen generating part to generate an information selecting screen to ask for information on the token information when the test mode is selected, and to generate test information on the basis of information input through the information selecting screen.

11. The software test apparatus according to claim 10, wherein the controller controls the interface screen generating part to generate a type selecting screen to select a test type when the test target function is input, and to generate the test information on a basis of the test type input through the type selecting screen.

12. The software test apparatus according to claim 11, wherein the information selecting screen comprises a screen to ask for information on at least one of variable information, define information, sub function information, and standard function information.

13. The software test apparatus according to claim 12, wherein the variable information comprises at least one of a variable data type, information on whether a variable pointer is set up, and test case information.

14. The software test apparatus according to claim 13, wherein the test case information comprises a test type having at least one of a fixed case, a default case, and a user case.

15. The software test apparatus according to claim 14, wherein the controller generates the test information having at least one of a test case as a reference for the target function test item and a test driver.

16. The software test apparatus according to claim 10, wherein the test type comprises one of a unit test and an integration test.

17. The software test apparatus according to claim 10, wherein the controller comprises a display controller to control the interface screen generating part and a test information generating part to generate the test information.

18. A computer readable recording medium to execute a computer readable code to perform a software test method, the method comprising:
operating a test mode to start a software test;
inputting a test target function;
reading token information of the test target function;
displaying an information selecting screen to ask for information on the token information;
generating test information according to the information on the token information input through the information selecting screen and the test target function; and
outputting the test information to test the test target function.

19. A software test method, comprising:
generating an interface screen to receive a test target function;
determining token information according to the test target function input;
generating test information according to the token information selected; and
testing a software according to the test information generated.

20. The method of claim 19 wherein the software tested is a forming unit of software tested independently by a user.

21. The method of claim 19, further comprising:
inputting a software language type before determining the token information,
wherein the determining of the token information is performed according to the test target function input and the software language type input.

22. The method of claim 19, further comprising:
inputting a type of software test before determining the token information,
wherein the determining of the token information is performed according to the test target function input and the type of software test input.
